# EUROPEAN PATENT APPLICATION

(11) **EP 4 398 195 A1**
(43) Date of publication of application: **10.07.2024**
(21) Application number: 21955705.5
(22) Date of filing: 25.10.2021
(51) Int. Cl.: G06T 19/00, F24F 11/00

(54) **INSTALLATION PROMPT METHOD, CLOUD SERVER, ELECTRONIC DEVICE, AND STORAGE MEDIUM**

(30) Priority: 31.08.2021 CN 202111013980
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: CHEN, Weicheng, Foshan, Guangdong 528311 (CN); WENG, Jinlian, Foshan, Guangdong 528311 (CN)
(74) Representative: Ran, Handong
(86) International application number: PCT/CN2021/126113
(87) International publication number: WO 2023/029176

(57) **Abstract**

An installation prompt method, which is applied to a cloud server. The method comprises: acquiring logistics state information, wherein the logistics state information represents whether a first functional module of an air conditioner has been received (S10); and when the logistics state information is first state information, controlling a target device to output installation guidance information, wherein the first state information is information indicating that the first functional module has been received, and the installation guidance information is information for guiding the first functional module to be installed and used in a preset area of the air conditioner (S20).

## Description

### CROSS-REFERENCE TO RELATED APPLICATIONS

This application claims priority to Chinese Patent Application No. 202111013980.5, filed on August 31, 2021, the entire contents of which are incorporated herein by reference.

### TECHNICAL FIELD

The present application relates to the technical field of an air conditioner, and in particular to an installation prompting method, a cloud server, an electronic device and a computer-readable storage medium.

### BACKGROUND

With the development of economy and technology, air conditioners are used more and more widely, and the performance of air conditioners is constantly optimized. Some air conditioners will provide an installation area, and users can choose the functional modules they need to purchase and install them in the installation area, so that the functions of the air conditioner can meet the user's needs.

At present, after users get the functional modules they purchased, they generally need to manually install the functional modules on the air conditioner. However, most users do not know how to install and use the functional modules, which is prone to problems such as unsuccessful installation or incorrect module installation positions, causing inconvenient for users to install and affecting the normal use of the functional module on the air conditioner.

### SUMMARY

The main purpose of the present application is to provide an installation prompting method, an air conditioner and a computer-readable storage medium, aiming to improve the convenience of installing functional modules in the air conditioner and ensure that the functional modules can quickly reach normal use status on the air conditioner.

In order to achieve the above purpose, the present application provides an installation prompting method, which is applied to the cloud server. The installation prompting method includes the following steps:
obtaining logistics status information, the logistics status information indicates whether a first functional module of an air conditioner has been received; and
controlling a target device to output installation guidance information, in response to that the logistics status information is first status information;
the first status information is configured to indicate that the first functional module has been received, and the installation guidance information is configured to guide installation and use of the first functional module in a preset area of the air conditioner.

In an embodiment, the logistics status information is sent by an external logistics system server, and after obtaining the logistics status information, the method further includes:
in response to that logistics identification of the first functional module and a receipt confirmation instruction corresponding to the first functional module exist in the logistics status information, determining that the logistics status information is the first status information.

In an embodiment, controlling the target device to output the installation guidance information of the first functional module in response to that the logistics status information is the first status information includes:
in response to that the logistics status information is the first status information, determining device identification of a purchased device corresponding to the first functional module according to logistics identification corresponding to the first functional module;
determining that an electronic device corresponding to the device identification is the target device; and
sending receipt prompting information to the target device, so that the target device outputs the installation guidance information.

In an embodiment, before sending the receipt prompting information to the target device, the method further includes:
in response to that the logistics status information is the first status information, determining module data information of the first functional module according to the logistics identification; and
generating the receipt prompting information according to the module data information, so that the target device outputs the installation guidance information including the module data information.

In an embodiment, determining the device identification of the purchased device corresponding to the first functional module according to the logistics identification corresponding to the first functional module includes:
determining the device identification corresponding to the logistics identification based on target associated information; and/or
determining the module data information of the first functional module according to the logistics identification includes:
determining the module data information corresponding to the logistics identification based on the target associated information;
the target associated information is obtained by associating the device identification, the logistics identification and the module data information in response to that the first functional module is in a purchased state.

In an embodiment, before obtaining the logistics status information, the method further includes:
in response to that the first functional module is in the purchased state, obtaining order information of the first functional module and sending the order information to an external logistics system server, so that the external logistics system server returns the logistics identification; the external logistics system server is configured to control a process from shipment to receipt of the first functional module; and
in response to receiving the logistics identification, associating the device identification, the logistics identification, the module data information and the order information to obtain the target associated information.

In an embodiment, the installation guidance information includes module data information of the first functional module, installation process information of the first functional module and/or a recommended installation position of the first functional module in the preset area.

Besides, in order to achieve the above objective, the present application further provides an installation prompting method, applied to an electronic device, including:
in response to receiving receipt prompting information sent by a cloud server, obtaining installation guidance information of a first functional module, wherein the installation guidance information is configured to guide installation and use of the first functional module in a preset area of an air conditioner; and
outputting the installation guidance information;
the receipt prompting information includes information that the first functional module has been received.

In an embodiment, the installation guidance information includes recommended installation positions, the recommended installation positions include positions where the first functional module and the second functional module are respectively recommended to be installed in the preset area, the second functional module is a functional module currently installed in the preset area, and obtaining the installation guidance information of the first functional module includes:
determining the recommended installation positions according to first module information and second module information, wherein the first module information is information of the first functional module, and the second module information is information of the second functional module currently installed in the preset area of the air conditioner.

In an embodiment, the installation prompting method further includes:
in response to receiving the receipt prompting information, outputting the receipt prompting information;
in response to that there is a request instruction for the installation guidance information returned based on the receipt prompting information, obtaining the installation guidance information of the first functional module corresponding to the receipt prompting information.

Besides, in order to achieve the above objective, the present application further provides a cloud server, including: a memory, a processor and an installation prompting program stored on the memory and executable on the processor, wherein steps of the installation prompting method as described above are implemented when the installation prompting program is executed by the processor.

Besides, in order to achieve the above objective, the present application further provides an electronic device, including: a memory, a processor and an installation prompting program stored on the memory and executable on the processor, wherein steps of the installation prompting method as described above are implemented when the installation prompting program is executed by the processor.

Besides, in order to achieve the above objective, the present application further provides a computer-readable storage medium, wherein an installation prompting program is stored on the computer-readable storage medium, and steps of the installation prompting method as described above are implemented when the installation prompting program is executed by a processor.

The present application proposes an installation prompting method, which controls the target device to output installation guidance information when the first functional module of the air conditioner is in the logistics state of having been received, so that when the first functional module is received, it can know how to install and use the first functional module in the preset area of the air conditioner based on the installation guidance information output by the target device, thereby improving the convenience of installing the functional module in the air conditioner and ensuring that the functional module can quickly reach normal use status on the air conditioner.

### BRIEF DESCRIPTION OF THE DRAWINGS

FIG. 1 is a schematic diagram of a hardware structure involved in the operation of an installation prompting method according to an embodiment of the present application.
FIG. 2 is a schematic flowchart of the installation prompting method applied to a cloud server according to an embodiment of the present application.
FIG. 3 is a schematic flowchart of the installation prompting method applied to the cloud server according to another embodiment of the present application.
FIG. 4 is a schematic flowchart of the installation prompting method applied to an electronic device according to an embodiment of the present application.

The realization of the purpose, functional features and advantages of the present application will be further described in conjunction with the embodiments and with reference to the accompanying drawings.

### DETAILED DESCRIPTION OF THE EMBODIMENTS

It should be understood that the specific embodiments described here are only used to explain the present application, and are not intended to limit the present application.

The main solution of the embodiment of the present application is: when a first functional module is in a preset state, obtaining first module information and second module information; the preset state includes the state that the first functional module has completed the transaction. The first module information is the information of the first functional module, and the second module information is the information of the second functional module currently installed in the preset area of the air conditioner. A recommended installation position is determined according to the first module information and the second module information. The recommended installation position includes the positions in which the first functional module and the second functional module respectively recommend installing in the preset area. Installation prompting information is output according to the recommended installation position.

In the related art, users generally install functional modules at any position within the installation area after purchasing them, which can easily lead to inaccurate installation position of the functional modules and result in poor effect in improving indoor air quality by the air conditioner.

The present application provides the above solution, aiming to improve the accuracy of the installation position of the functional module on the air conditioner, so as to improve the effect of the air conditioner in improving indoor air quality.

The embodiment of the present application provides an air conditioner 01. In this embodiment, the air conditioner 01 is a cabinet air conditioner. In other embodiments, the air conditioner 01 can also be a wall-mounted air conditioner, a window air conditioner, a ceiling air conditioner, etc.

In this embodiment, the air conditioner 01 includes a housing and a functional module. An air duct is provided in the housing. The air duct can specifically include an indoor return air duct and/or a fresh air duct. The functional module is located in the air duct to regulate the air entering the air duct. A fan can be provided in the air duct, and the fan can drive air into and out of the air duct.

In this embodiment, the functional module is an air conditioning module. The functional module can be any one or more of the functional modules that have air conditioning function such as a heat exchange module, a purification module (such as an activated carbon module, a plasma sterilization module), a humidity adjustment module (such as a dehumidification module and/or a humidification module), an oxygenation module (such as a positive and negative ion module), a fragrance module, a heating module (such as an electric auxiliary heating module) and/or a filter module (such as High efficiency particulate air Filter (HEPA)) and a formaldehyde filter in the heat pump circulation system. The functional module can be fixedly installed in the air duct or detachably installed in the air duct. In other embodiments, the functional module can also be other modules that do not have air conditioning functions, such as modules with detection functions.

In this embodiment, the functional module can be detachably installed in a preset area in the air duct. The functional module can be installed in the preset area through plugging, snapping, etc. An installation base can be provided in the preset area of the air duct. The installation base can include one or more installation parts, and each installation part can be detachably connected to the functional module. For example, the installation part is an installation slot, and the functional module and the installation slot can be detachably connected through plug matching. Based on this, the user can install the required functional modules into the air duct based on actual usage requirements to regulate the air flowing through the air duct. The installation base can be fixed in the air duct before the air conditioner 01 leaves the factory, while the functional module can be installed on the installation base before leaving the factory or not, and can be purchased by the user according to their actual needs.

Specifically, in order to realize automatic identification of the functional modules currently installed in the air duct, a detection module (such as a radio frequency antenna, a camera, etc.) can be provided at the position corresponding to the installation base in the air duct, and an identification part carrying identification information (such as RFID cards, barcodes, QR codes, etc.) is provided on the functional module. The identification information carried by the identification parts corresponding to different functional modules is different. Based on this, by identifying the identification information in the detection signal of the detection module, it is possible to obtain information about different functional modules. Specifically, the identification information can be functional type information for identifying the functional module, information for identifying the target installation position of the functional module, information for identifying the copyright of the functional module, and/or information for identifying the version of the functional module, etc. Based on this, through the identification of the detection signal of the detection module, it is possible to determine whether there is the functional module installed in the air duct, the type of the installed functional module, the position of the installed functional module, whether the installation position is accurate, whether the installation version is correct, and whether the installed functional module is genuine based on the identification results.

Further, the preset area is divided into multiple sub-areas for detachable installation of multiple functional modules. Based on this, the installation base can include an installation part, and each installation part is correspondingly provided with a detection module. The area occupied by each installation part can be determined as a sub-area, and the detection area of each detection module covers its corresponding sub-area to detect relevant information of the functional modules in its corresponding sub-area. Specifically, preset identification information corresponding to multiple different functional modules can be stored in advance. If the detection signal of the detection module has a signal that matches any preset identification information, it indicates that there is a functional module in the sub-area corresponding to the detection module; if there is no signal that matches the preset identification information in the detection signal, it indicates that no functional module is installed in the sub-area corresponding to the detection module.

Specifically, multiple preset identification information can be associated with different sub-areas in advance. For example, in order to ensure the adjustment effect and the durability of the functional modules, the relative positions of multiple different functional modules can be fixed in advance to form preset installation positions for multiple functional modules in the air duct. Different sub-areas can be associated with corresponding preset identification information based on the preset installation positions. Based on this, the detection modules in different sub-areas are respectively associated with different preset identification information. The detection signal of the detection module can be analyzed based on the preset identification information associated with the detection module, and based on the analysis results, it is possible to determine whether the position of the functional module is accurate. For example, in order to prevent modules with high dryness requirements (such as adjustment modules and filters that require electricity) from being affected by moisture, it is possible to provide the dehumidification module at the position closest to the air inlet, provide the humidification module at the position farthest from the air inlet, and provide other functional modules between the dehumidification module and the humidification module. Based on this, the detection module corresponding to the first sub-area closest to the air inlet can be associated with the preset identification information of the dehumidification module, the detection module farthest from the air inlet can be associated with the preset identification information of the humidification module, and the preset identification information corresponding to other functional modules can be associated with the sub-area between the first sub-area and the second sub-area respectively. In addition, each sub-area between the first sub-area and the second sub-area is associated with the preset identification information corresponding to all other functional modules, so that other functional modules can be freely installed between the first sub-area and the second sub-area, which is convenient for the user to operate.

Further, the air conditioner 01 can also include a smart large screen, which is installed on the housing. The smart large screen can be used for human-computer interaction, so that the user can control the operation of the air conditioner 01, purchase required functional modules or obtain prompting information related to the operation of the air conditioner 01 based on human-computer interaction.

Further, the air conditioner 01 also includes a control device, and the above-mentioned detection module, the functional module installed in the air duct, and the smart large screen can be connected to the control device here.

In the embodiment of the present application, the installation prompting device includes: a processor (such as a CPU), a memory, etc. The memory can be a high-speed RAM memory or a stable memory (non-volatile memory), such as disk memory. The memory can optionally be a storage device independent of the aforementioned processor.

Based on the above-mentioned air conditioner 01, an embodiment of the present application proposes a cloud server that is configured to provide installation prompts for the functional modules on the above-mentioned air conditioner 01.

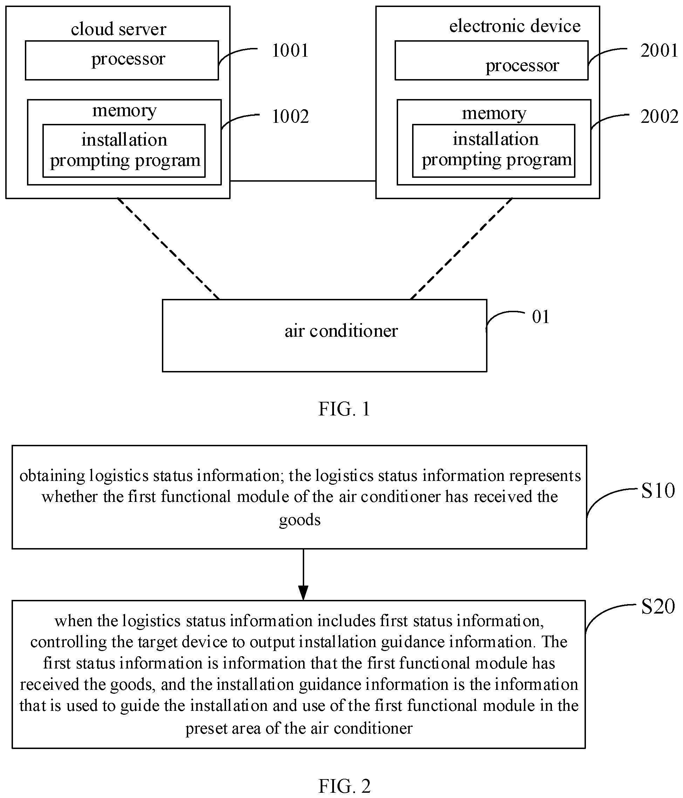

In this embodiment, as shown in FIG. 1, the cloud server includes: a processor 1001 (such as a CPU), a memory 1002, etc. The memory 1002 can be a high-speed RAM memory or a stable memory (non-volatile memory), such as a disk memory. The memory 1002 can optionally be a storage device independent of the aforementioned processor 1001.

Those skilled in the art can understand that the device structure shown in FIG. 1 does not constitute a limitation on the device, and can include more or fewer components than shown, or a combination of certain components, or differently arranged components.

As shown in FIG. 1, a memory 1002, which is a computer-readable storage medium, can include an installation prompting program. In the device shown in FIG. 1, the processor 1001 can be used to call the installation prompting program stored in the memory 1002 and perform relevant steps of the installation prompting method in the following embodiment.

Based on the above-mentioned air conditioner 01, embodiments of the present application also provide an electronic device that is used to provide installation prompts for the functional modules on the above-mentioned air conditioner 01. Referring to FIG. 1, the electronic device is connected to the above-mentioned cloud server. In this embodiment, the electronic device is a terminal device installed with a preset application corresponding to the cloud server, such as a mobile phone, an electronic watch, a television, a tablet computer, a smart large screen, etc. installed with the preset application. In this embodiment, the electronic device is a device independent of the above-mentioned air conditioner 01; in other embodiments, the electronic device can also be a device provided on the air conditioner 01, such as a smart large screen provided on the air conditioner 01, etc.

In this embodiment, as shown in FIG. 1, the electronic device includes: a processor 2001 (such as a CPU), a memory 2002, etc. The memory 2002 can be a high-speed RAM memory or a stable memory (non-volatile memory), such as a disk memory. The memory 2002 can optionally be a storage device independent of the aforementioned processor 2001.

Those skilled in the art can understand that the device structure shown in FIG. 1 does not constitute a limitation on the device, and can include more or fewer components than shown, or a combination of certain components, or differently arranged components.

As shown in FIG. 1, a memory 2002, which is a computer-readable storage medium, can include an installation prompting program. In the device shown in FIG. 1, the processor 2001 can be used to call the installation prompting program stored in the memory 2002, and perform the relevant steps of the installation prompting method in the following embodiment.

The embodiment of the present application also provides an installation prompting method, which is applied to the cloud server to prompt the installation and use of the functional modules of the air conditioner.

Referring to FIG. 2, an embodiment of the installation prompting method of the present application is proposed. In this embodiment, the installation prompting method includes:
step S10, obtaining logistics status information; the logistics status information represents whether the first functional module of the air conditioner has been received;

Specifically, in this embodiment, the logistics status information can be sent by an external logistics system server connected to the cloud server. In other embodiments, the logistics status information can also be generated by the cloud server itself.

The logistics status information can include a logistics identification of the first functional module and characterization information of its associated goods status (such as delivery status, in transit, received). Specifically, when the logistics status information contains the logistics identification of the first functional module and its corresponding receipt confirmation instruction, it is determined that the logistics status information is the first status information (that is, the first functional module has been received). When the logistics status information does not contain the logistics identification of the first functional module and its corresponding receipt confirmation instruction, or when the logistics status information contains the logistics identification of the first functional module and its corresponding delivery instruction or transportation status information, it is determined that the logistics status information is the second status information (that is, the first functional module has not been received). Based on this, after the user purchases the first functional module online, the external logistics system can monitor the logistics process of the first functional module, and generate logistics status information based on the monitoring results and send it to the cloud server. The cloud server can promptly know the received status of the first functional module, and subsequently output installation guidance information in a timely manner upon receipt, so that the user can promptly know how to install the first functional module on the air conditioner.

Step S20, when the logistics status information includes first status information, controlling the target device to output installation guidance information. The first status information is information that the first functional module has been received, and the installation guidance information is the information that is used to guide the installation and use of the first functional module in the preset area of the air conditioner.

The target device here is a device connected to the cloud server, which can be a preset designated device (such as a smart large screen on the air conditioner or a user-specified device, etc.), or a device determined based on logistics status information, etc. The target device is installed with a preset application corresponding to the cloud server. The preset application can be used for control related to the operation of the air conditioner such as purchasing functional modules of the air conditioner, etc.

The installation guidance information can be generated by the cloud server or generated by the target device itself.

The installation guidance information here can be output through display, sound broadcast, push information and other prompting methods. The prompting method can be the system default or selected by the user based on their actual needs.

The installation guidance information includes the module information of the first functional module (such as function, life and/or recommended replacement time, etc.), the installation process information of the first functional module and/or the recommended installation position of the first functional module within the preset area.

Specifically, the cloud server can send a control instruction to output the installation guidance information to the target device. After receiving the control instruction, the target device directly executes the control instruction to realize the output of the installation guidance information. The cloud server can also output a status instruction corresponding to the first status information to the target device, and the target device performs the operation of outputting installation guidance information after receiving the status instruction.

The installation prompting method proposed in the embodiment of the present application controls the target device to output installation guidance information when the first functional module of the air conditioner is in the logistics status of having been received, so that when the first functional module is received, it can be known how to install and use the first functional module in the preset area of the air conditioner based on the installation guidance information output by the target device, thereby improving the convenience of installing the functional module in the air conditioner and ensuring that the functional module can quickly reach normal use state on the air conditioner.

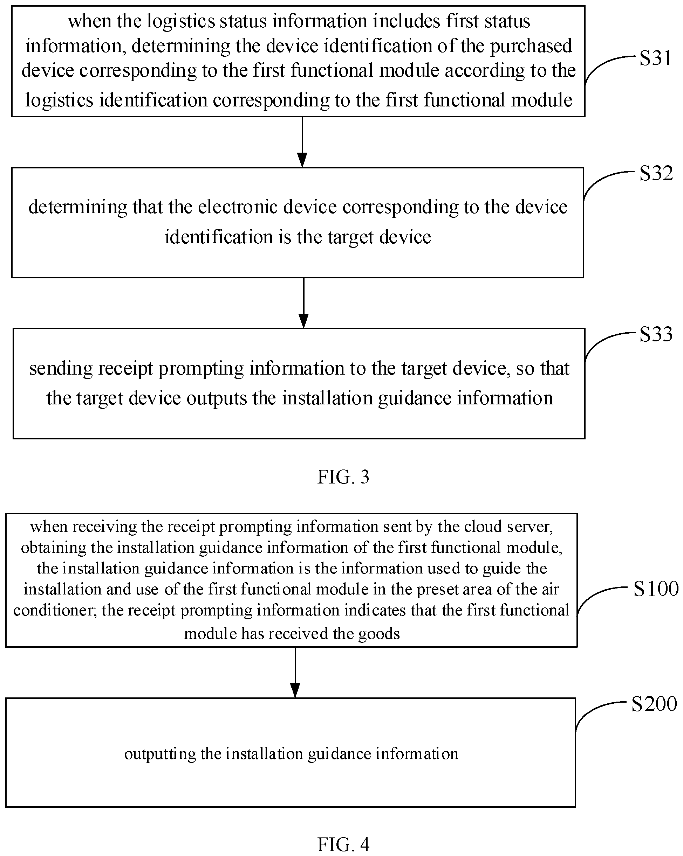

Furthermore, based on the above embodiment, another embodiment of the installation prompting method of the present application is proposed. In this embodiment, referring to FIG. 3, step S30 includes:
step S31, when the logistics status information includes first status information, determining the device identification of the purchased device corresponding to the first functional module according to the logistics identification corresponding to the first functional module.

Specifically, the logistics identification here (such as logistics number, logistics company name, etc.) can be extracted from the first status information. The purchased device is specifically a device used by the user to perform the purchase operation of the first functional module. The device identification is specifically the identity characteristic information used to distinguish different devices (such as device name and/or device number, etc.)

The corresponding relationship between the logistics identification corresponding to the first functional module and the corresponding device identification of the purchased device can be pre-stored in the cloud server. The corresponding relationship can be generated and saved in the cloud server during the purchase process of the first functional module. Based on this corresponding relationship, the device identification corresponding to the logistics identification can be determined.

Step S32, determining that the electronic device corresponding to the device identification is the target device; and
step S33, sending receipt prompting information to the target device, so that the target device outputs the installation guidance information.

The receipt prompting information is specifically information used to prompt that the first functional module of the target device is currently in a received status. The receipt prompting information here can be fixed information set in advance, or information determined according to the relevant information of the first functional module (for example, the first status information can be used as the receipt prompting information, or the receipt prompting information can be determined according to the first status information and other module information of the first functional module).

Specifically, in this embodiment, when the logistics status information includes first status information, the module data information of the first functional module is determined according to the logistics identification; the receipt prompting information is generated according to the module data information, so that the target device outputs the installation guidance information including the module data information. The module data information can specifically include module function type, module life, recommended replacement time, production date and/or cleaning guidance information, etc. The corresponding relationship between the logistics identification corresponding to the first functional module and the module data information of the first functional module can be pre-stored in the cloud server. The corresponding relationship can be generated and saved in the cloud server during the purchase process of the first functional module. Based on this corresponding relationship, the module data information corresponding to the logistics identification here can be determined.

Here, when the first functional module has been received, the device used by the user to purchase the first functional module is determined based on the logistics identification to output the installation guidance information, thereby ensuring that the user can receive the relevant installation guidance in time when receiving the goods to achieve accurate installation and the functional module can quickly enter normal working status in the air conditioner. Moreover, on this basis, the module data information of the first functional module is also obtained based on the logistics identification, thereby ensuring that the target device can accurately output installation guidance information containing the module data information of the functional module received by the current user, ensuring that the accuracy of the installation guidance information, so that users can clearly and accurately understand the installation and usage precautions of the first functional module in the preset module based on the installation guidance information.

Further, in this embodiment, determining the device identification of the purchased device corresponding to the first functional module according to the logistics identification corresponding to the first functional module includes: determining the device identification corresponding to the logistics identification based on the target association information; and/or, determining the module data information of the first functional module according to the logistics identification includes: determining the module data information corresponding to the logistics identification based on the target association information, the target association information is obtained by associating the device identification, the logistics identification and the module data information when the first functional module is in a purchased state.

The target association information here is specifically generated by the cloud server and saved in the cloud server. Specifically, the user uses the device to purchase the first functional module. When the purchase amount of the first functional module is successfully paid and the first functional module is in the unshipped state, it can be determined that the first functional module is in the purchased state, and the device identification, the logistics identification and the module data information can be obtained by the cloud server and are associated to obtain the target associated information here. Furthermore, in addition to the device identification, logistics identification and module data information, the device identification, logistics identification and module data information in the target associated information can also be associated with the order information of the first functional module.

In this embodiment, when the first functional module completes the purchase, the device identification, logistics identification, module data information, etc. are associated to form target associated information. Based on this, it can be ensured that when the first functional module is in the goods received state, the cloud server can accurately and quickly determine the target device to output the installation guidance information based on the target associated information and quickly output the accurate installation guidance information.

Further, in this embodiment, before step S 10, the method also includes: when the first functional module is in the purchased state, obtaining the order information of the first functional module and sending the order information to the external logistics system server, so that the external logistics system server returns the logistics identification; the external logistics system is used to control the process from shipment to receipt of the first functional module; when the logistics identification is received, associating the device identification, the logistics identification and the order information to obtain the target associated information. Specifically, after the user completes the purchase of the first functional module through a terminal device such as a mobile phone, the cloud server can record the device identification of the terminal device used by the user to purchase the first functional module, the order information generated by the user to purchase the first functional module, and the module data information of the first functional module. The cloud server sends the order information to the external logistics system server. After receiving the order information, the external logistics system server generates the logistics identification according to the order information and sends the generated logistics identification to the cloud server. After receiving the logistics identification, the cloud server associates the logistics identification, device identification, module data information and order information to obtain the target associated information. The warehouse corresponding to the first functional module can deliver goods according to the order information and logistics identification in the target associated information. In this embodiment, data interaction is established between the external logistics system server, the cloud server and the device where the user purchases the functional module, thereby ensuring that the user can track the logistics status information of the first functional module after purchasing the functional module. Once the first functional module is successfully signed for, the installation guidance information can be immediately obtained on the device where the user purchases the first functional module, ensuring that the user is promptly reminded of the precautions during the installation and use of the first functional module, further improving the convenience of the user to install the first functional module and the installation efficiency of the first functional module.

The embodiment of the present application also provides an installation prompting method, which is applied to an electronic device to prompt the installation and use of functional modules of the air conditioner. Referring to FIG. 4, the installation prompting method includes the following steps:
step S100, when receiving the receipt prompting information sent by the cloud server, obtaining the installation guidance information of the first functional module. The installation guidance information is the information used to guide the installation and use of the first functional module in the preset area of the air conditioner. The receipt prompting information indicates that the first functional module has been received.

The receipt prompting information here can be generated in the same process as the receipt prompting information mentioned in the above embodiment, and is also information directly sent to the electronic device when the cloud server detects the first status information.

The electronic device here is specifically the same as the target device and purchased device mentioned in the above embodiments.

Step S200, outputting the installation guidance information.

The concept, generation method, and output process of the installation guidance information here are the same as those mentioned in the above implementation, and will not be described again here. The electronic device can output installation guidance information in a preset application installed in the electronic device.

In this embodiment, through the cooperation of the electronic device and the cloud server, the user can timely obtain the installation instructions related to the first functional module through the electronic device when signing for the first functional module, thereby improving the convenience of installing the functional modules in the air conditioner. This ensures that the functional module can quickly reach normal use status on the air conditioner.

Further, in this embodiment, the installation guidance information includes the recommended installation position, and the recommended installation position includes the position where the first functional module and the second functional module are recommended to be installed respectively in the preset area. The second functional module is the functional module currently installed in the preset area, and obtaining the installation guidance information of the first functional module includes:

determining the recommended installation position according to the first module information and the second module information; the first module information is the information of the first functional module, and the second module information is the information of the second functional module currently installed in the preset area of the air conditioner.

The preset area is the area in the air duct of the air conditioner. Both the first functional module and the second functional module are air conditioning modules, which can be used to regulate air flowing through the air duct. In other implementations, the first functional module or the second functional module can also be a detection module for monitoring the condition of the air duct.

The first functional module and the second functional module can be modules of the same type or different types. The number of the second functional module can be one or more. When there is more than one second functional module in the preset area, the types of more than one second functional module can be the same or different.

The first module information and the second module information are specifically information related to the functions implemented by the first functional module and the second functional module, such as function type, module usage time, module life and/or environmental parameter limits allowed for module function operation (such as temperature and/or humidity) etc.

Specifically, the module identification and corresponding module information of all functional modules allowed to be used by the air conditioner can be collected in advance, and a module information library can be constructed based on the collected information. The module information library can be saved in the air conditioner or the cloud. Based on this, the module information library saved by the air conditioner or the cloud is queried through the module identification of the first functional module and the second functional module, and the first module information and the second module information can be obtained.

The recommended installation location is specifically the position where the air conditioning quality of the air conditioner reaches the optimal state when both the first and second functional modules are installed in the preset area.

Different first module information and second module information can correspond to different recommended installation positions. The distance between the first and second functional modules corresponding to the different recommended installation positions is different, or the relative positions (distance and/or direction) of the first and second functional modules corresponding to different recommended installation positions with the air outlet or the air inlet are different.

Specifically, the arrangement rules of the functional module in the preset area can be established in advance. Based on the arrangement rules, the recommended installation positions corresponding to the current first module information and the second module information can be determined.

The first module information includes the first functional type of the first functional module, and the second module information includes the second function type of the second functional module.

Different first and second function types correspond to the different recommended installation positions. Based on this, the corresponding relationship between the combination of different function types and the recommended installation position can be established in advance. Based on the corresponding relationship, the recommended installation position corresponding to the current first and second function types can be determined.

In this embodiment, the recommended installation position is determined based on the function types corresponding to the first functional module and the second functional module, to ensure that when the first functional module and the second functional module are installed and run in the preset area according to the recommended installation positions, the functional implementation of each functional module will not affect each other, ensuring the accuracy of the recommended installation position output to ensure that the air conditioning quality of the air conditioner can reach the optimal state when both the first and second functional modules are installed on the air conditioner.

Specifically, in this embodiment, when the first functional type and the second function type include a humidification type and a purification type, the first target position is determined to be a first recommended installation position for the functional module of the humidification type in the first functional module and the second functional module. The second target position is determined to be a second recommended installation position for the functional module of the purification type in the first functional module and the second functional module. The recommended installation positions include the first recommended installation position and the second recommended installation position, and the distance between the first target position and the air outlet of the air conditioner is less than the distance between the second target position and the air outlet.

The function types of modules such as formaldehyde removal module, dust removal module, odor removal module, and sterilization module all belong to the purification type.

For example, when the first functional type is humidification type and the second functional type is purification type, in the recommended installation positions, the distance between the installation position corresponding to the first functional module and the air outlet is less than the distance between the installation position corresponding to the second functional module and the air outlet. For example, when the second functional type is humidification type and the first functional type is purification type, in the recommended installation positions, the distance between the installation position corresponding to the first functional module and the air outlet is greater than the distance between the installation position corresponding to the second functional module and the air outlet. For example, there are more than one second functional modules, at least one of which is a purification type and one of which is a humidification type, and the first functional module is a purification type. In the recommended installation positions, the distance between the installation position corresponding to the first functional module of the humidification type and the air outlet is greater than the distance between the installation position corresponding to the second functional module or the first functional module of the purification type and the air outlet.

Based on this, it is beneficial to prevent high humidity from affecting the purification function of the purification module and ensure that the air purification and humidification effects of the air conditioner can reach the best state.

In addition, in other embodiments, when the first functional type and the second function type include dehumidification type and purification type, the first target position is determined to be a first recommended installation position for the functional module of the humidification type in the first functional module and the second functional module. The second target position is determined to be a second recommended installation position for the functional module of the purification type in the first functional module and the second functional module. The recommended installation positions include the first recommended installation position and the second recommended installation position, and the distance between the first target position and the air outlet of the air conditioner is less than the distance between the second target position and the air outlet.

Based on this, the impact of humidity on the purification function of the purification module is effectively reduced, ensuring that the air purification effect and dehumidification effect of the air conditioner can reach the best state.

Furthermore, in other embodiments, when the first functional type and the second functional type include more than one identical functional type, two functional modules where the first functional module and the second functional module belong to the same functional type in the recommended installation positions are spaced.

In this embodiment, the recommended installation location is determined through the above manner, so that the user can know how to accurately install the first functional module and the second functional module based on the installation guidance information when receiving the first functional module, which is beneficial to improving the accuracy of the installation position of the functional module on the air conditioner, enables the performance of each functional module to coordinate with each other, and effectively improves the indoor air quality of the air conditioner.

Further, in this embodiment, the installation prompting method also includes the following steps: when receiving the receipt prompting information, outputting the receipt prompting information; if there is a request instruction for installation guidance information returned based on the receipt prompting information, obtaining the installation guidance information of the first functional module corresponding to the receipt prompting information. Based on this, after obtaining the receipt prompting information, the user can decide whether to view the installation guidance information based on their needs. If there is a need to obtain installation guidance information, the user can input a request instruction. Here, the above method can ensure that the output of the installation guidance information can accurately match the actual needs of the user.

It should be noted that the data processing process of the cloud server involved in this embodiment is the same as the related implementation of the installation prompting method applied to the cloud server mentioned above, and will not be described again here.

In addition, embodiments of the present application also provide a computer-readable storage medium. An installation prompting program is stored on the computer-readable storage medium. When the installation prompting program is executed by the processor, steps of the installation prompting method in any one of the embodiments as described above are implemented.

It should be noted that, as used herein, the terms "include", "comprise" or any other variation thereof are intended to cover a non-exclusive inclusion, such that a process, method, article or system that includes a list of elements not only includes those elements, but also includes other elements not expressly listed or that are inherent to the process, method, article or system. Without further limitation, an element defined by the statement "includes a..." does not exclude the presence of other identical elements in the process, method, article, or system that includes that element.

The above serial numbers of the embodiments of the present application are only for description and do not represent the advantages or disadvantages of the embodiments.

Through the above description of the embodiments, those skilled in the art can clearly understand that the methods of the above embodiments can be implemented by means of software plus the necessary general hardware platform, of course, also by hardware, but in many cases the former is better. Based on this understanding, the technical solution of the present application, in essence, or a part that contributes to the related art, can be embodied in the form of a software product. The computer software product is stored in the storage medium (such as ROM/RAM, magnetic disk, optical disk) as described above, including several instructions to cause a terminal device (which can be a mobile phone, computer, server, air conditioner, or network device, etc.) to execute the methods described in various embodiments of the present application.

The above are only some embodiments of the present application, and are not intended to limit the scope of the present application. Any equivalent structure or equivalent process transformation made using the contents of the description and drawings of the present application, or directly or indirectly applied in other related technical fields, are included in the scope of the present application.

## Claims

1. An installation prompting method, applied to a cloud server, comprising:
obtaining logistics status information, wherein the logistics status information indicates whether a first functional module of an air conditioner has been received; and
controlling a target device to output installation guidance information, in response to that the logistics status information is first status information;
wherein the first status information is configured to indicate that the first functional module has been received, and the installation guidance information is configured to guide installation and use of the first functional module in a preset area of the air conditioner.

2. The installation prompting method according to claim 1, wherein the logistics status information is sent by an external logistics system server, and after obtaining the logistics status information, the method further comprises:
in response to that logistics identification of the first functional module and a receipt confirmation instruction corresponding to the first functional module exist in the logistics status information, determining that the logistics status information is the first status information.

3. The installation prompting method according to claim 1, wherein controlling the target device to output the installation guidance information of the first functional module in response to that the logistics status information is the first status information comprises:
in response to that the logistics status information is the first status information, determining device identification of a purchased device corresponding to the first functional module according to logistics identification corresponding to the first functional module;
determining that an electronic device corresponding to the device identification is the target device; and
sending receipt prompting information to the target device, so that the target device outputs the installation guidance information.

4. The installation prompting method according to claim 3, wherein before sending the receipt prompting information to the target device, the method further comprises:
in response to that the logistics status information is the first status information, determining module data information of the first functional module according to the logistics identification; and
generating the receipt prompting information according to the module data information, so that the target device outputs the installation guidance information comprising the module data information.

5. The installation prompting method according to claim 4, wherein determining the device identification of the purchased device corresponding to the first functional module according to the logistics identification corresponding to the first functional module comprises:
determining the device identification corresponding to the logistics identification based on target associated information; and/or
determining the module data information of the first functional module according to the logistics identification comprises:
determining the module data information corresponding to the logistics identification based on the target associated information;
wherein the target associated information is obtained by associating the device identification, the logistics identification and the module data information in response to that the first functional module is in a purchased state.

6. The installation prompting method according to claim 5, wherein before obtaining the logistics status information, the method further comprises:
in response to that the first functional module is in the purchased state, obtaining order information of the first functional module and sending the order information to an external logistics system server, so that the external logistics system server returns the logistics identification; the external logistics system server is configured to control a process from shipment to receipt of the first functional module; and
in response to receiving the logistics identification, associating the device identification, the logistics identification, the module data information and the order information to obtain the target associated information.

7. The installation prompting method according to any one of claims 1 to 6, wherein the installation guidance information comprises module data information of the first functional module, installation process information of the first functional module and/or a recommended installation position of the first functional module in the preset area.

8. An installation prompting method, applied to an electronic device, comprising:
in response to receiving receipt prompting information sent by a cloud server, obtaining installation guidance information of a first functional module, wherein the installation guidance information is configured to guide installation and use of the first functional module in a preset area of an air conditioner; and
outputting the installation guidance information;
wherein the receipt prompting information comprises information that the first functional module has been received.

9. The installation prompting method according to claim 8, wherein the installation guidance information comprises recommended installation positions, the recommended installation positions comprise positions where the first functional module and a second functional module are respectively recommended to be installed in the preset area, the second functional module is a functional module currently installed in the preset area, and obtaining the installation guidance information of the first functional module comprises:
determining the recommended installation positions according to first module information and second module information, wherein the first module information is information of the first functional module, and the second module information is information of the second functional module currently installed in the preset area of the air conditioner.

10. A cloud server, comprising: a memory, a processor and an installation prompting program stored on the memory and executable on the processor, wherein steps of the installation prompting method according to any one of claims 1 to 7 are implemented when the installation prompting program is executed by the processor.

11. An electronic device, comprising: a memory, a processor and an installation prompting program stored on the memory and executable on the processor, wherein steps of the installation prompting method according to claim 8 or 9 are implemented when the installation prompting program is executed by the processor.

12. A computer-readable storage medium, having an installation prompting program stored thereon, wherein steps of the installation prompting method according to any one of claims 1 to 9 are implemented when the installation prompting program is executed by a processor.
